# EUROPEAN PATENT APPLICATION

(11) **EP 1 003 148 A1**
(43) Date of publication of application: **24.05.2000**
(21) Application number: 98925648.2
(22) Date of filing: 23.06.1998
(51) Int. Cl.: G09F 27/00, G08G 1/133, G06F 13/12, B64D 11/00

(54) **NEW INFORMATION SYSTEM APPLICABLE TO PASSENGER TRANSPORTATION VEHICLES**

(30) Priority: 31.07.1997 ES 1700005
(71) Applicant: RED NACIONAL DE LOS FERROCARRILES ESPANOLES (RENFE), 28036 Madrid (ES)
(72) Inventor: GARCIA ALVAREZ, Alberto, E-28045 Madrid (ES); BERRIOS VILLABA, Antonio, E-28045 Madrid (ES)
(74) Representative: Munoz Garcia, Antonio
(86) International application number: ES9800179
(87) International publication number: WO9906986

(57) **Abstract**

A new information system to be applied to passenger carrying vehicles, formed starting from the association with a computer (1), of a TV tuned card (3), an omnidirectional radio antenna (4), a radio tuned card (5). an omnidirectional radio antenna (6), a sound card (2), a GPS (7), a cellular phone (8) related to a modem (9), a video reproducer (10), a mass storage medium (11), a VGA/PAL converter card (12), and some control interfaces (13), provinding a video signal to some video monitors (14) and some audio monitors (16), distributed - among the passengers demanding the system services via tactile displays (17), optionally integrated in the video monitors (14).

## Description

### BACKGROUND OF THE INVENTION

The present specification relates to an application for a Patent of Invention referring to a new information system to be applied to passenger carrying vehicles, particularly railways, the utility of which is to provide an efficient management of the information demanded by users and received from the system.

The new information system of the invention provides and manages both visual and sound information, which is spread by means of suitable output interfaces, and it is capable of providing this information upon request or in an automatic way, being picked up by appropiate input interfaces in hands of the final users and the invention - manager.

The generated information can be either pictorial, for instance: TV signals, video, location charts, etc., or acoustic or textual, including diverse information about timetables, transport or destination characteristics, and it is basically addressed to those users utilizing the carrying vehicle, although it is also capable of supporting information the use of which is restricted to the crew and pilots of the vehicles where the system is installed.

By means of appropiate location identifying mechanisms, the invention allows certain tasks related to the location of the vehicle to be performed, although this is also possible by means of coded commands transmitted through digital telephony.

### FIELD OF THE INVENTION

This invention will find application in the industry dedicated to the manufacture and implementation of information systems based on digital technology, exactly in the industry dedicated to the manufacture and implementation of information system applicable to passenger carrying vehicles, and, more specifically, to railways.

### RELATED ART

The applicant is aware of the existence and usual - utilization of TV, video or radio servants installed in vehicles, capable of providing signals of said media to a plurality of users, even under demand.

Likewise, the applicant is aware of the existence of graphic information systems which are also installed - in vehicles, which allow diverse information about the transport or about the most varied fields to be provided, and that these systems meet, in most cases the specifications for which they are designed and manufactured.

The above mentioned systems respond to basically simple mechanisms, and they operate independently one another, reducing efficiency and functional character to the ensemble, without optimizing the resources usually available.

In the light of the passenger's requirements for current media, it would be desirable to rely on an - information system combining the mentioned several subsystems in only one, and allowing for an adequate management of same, optimizing the available media and facilitating the incorporation of new services with a minimum cost, by providing an adequate flexibility thru a computerized management of same.

It would be also desirable that the information system should allow its data according to its geographical location to be managed, by relating certain events to specific geographical coordinates.

Nevertheless, the applicant is not aware of the existence at present of an invention presenting the characteristics definited as suitable.

### SUMMARY OF THE INVENTION

The new information system to be applied to passenger carrying vehicles as proposed by the invention, constitutes per se an obvious novelty in its application field, since starting from its utilization, it is possible to have an information system to be applied to passenger carrying vehicles, specially railways, providing an adequate computerized management of the different information subsystems of the type customarily installed in vehicles for carrying passengers, centralizing the management of all them, and providing a great flexibility optimizing the resources, and allowing for an easy incorporation or modification of same; likewise, it affords a chance to assign to a determinate geographical point, and previously shown, a definite event in the system.

In a most definite way, the new information system to be applied to passenger carrying vehicles is constituted starting from a computer, fitted with a suitable software managing the different information subsystems included in the context of the invention.

In this way, a TV tuned card is connected to one of the computer expansion slots, which, in turn, is connected to an omnidirectional TV antenna, which provides an audio/video signal from the emitter stations tuned at that time.

According to the location of the vehicle on the ground, the tuning of a definite TV chain will be carried out at a frequency allowing a better reception, depending on the repeater closer or providing a better signal, the whole process being performed by means of a computerized program and allowing, as a result, a very good reception all the time from the chains available and asked for by the users.

Likewise, at other expansion slot there is a radio - station tuned card providing an identical service with the radio frequencies available and demanded at every moment.

The invention relies on a data acquisition card of a GPS (Global Positioning System), providing it with an accurate information about its geographical location all the time, with a maximum error of the order of decameters, as well as data about speed and course. The knowledge of the geographical location allows the invention to be automated in the allocation of processes according to their placing, as well as to update the information which it serves the users.

In the same way, the system includes a digital video reproducer card, in MPEG format, connected to one of the computer expansion slots, allowing the stared digital video to be reproduced into hard disk, CD ROM or any other mass storage medium adequate because its access time and capacity.

The digital video signals or coming from any other source, are treated in a VGA/PAL converter, which produces signals adequate to the TV monitors which are customarily used for reproducing video signals, and, in the same way, the audio signal is treated and reproduced on a sound card incorporated into one of the computer expansion slots, providing a stereo signal which is audible at any of the audio monitors installed.

With the idea of being in a position to merge video images with a text or graph generated by the own system, the system makes use of a merging tablet capable of making up two PAL images, being able, for instance, of retransmitting any television program and superimposing information on the next stop.

The invention is controlled from a control post fitted with a monitor, keyboard and other ordinary interfaces, wherein the users' demands which are transmitted from tactile or similar displays, located in the place of same, are hierarchized.

There is a possibility of controlling the new information system by means of command packets, received via modem, or also through digital cellular telephony from a control post common to several information systems - located in different vehicles, or allocating certain events to definite geographical points whereby the vehicule carrying the invention is to pass.

In view of the extreme flexibility of a programmed system, as opposed to a cabled system, it is possible to include, by modifying the software, so many modifications or enlargements as it may be considered as necessary, so providing a great versatility and adaptability.

### BRIEF DESCRIPTION OF THE DRAWINGS

In order to complement this description and aid to a better understanding of the characteristics of the invention, the appending sheet of drawings, which is a part of this specificationn,shows, by way of illustrative and non-limiting example, the following:-

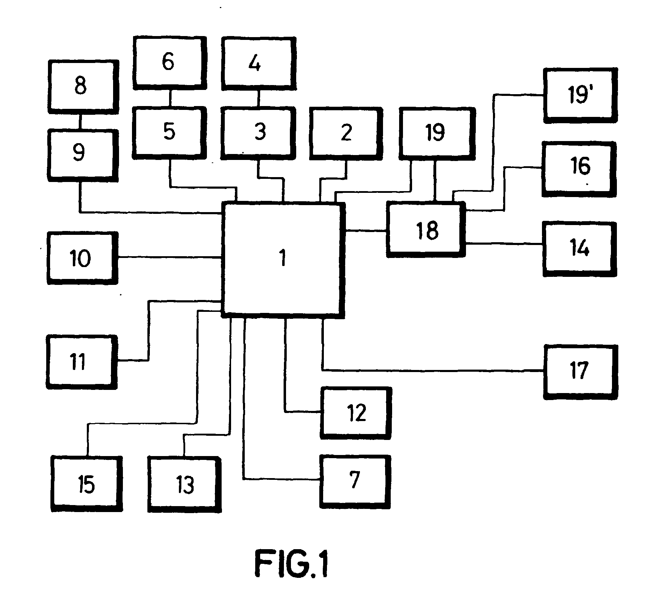

Figure 1 and sole shows a block diagram representing the subsystem related to the context of the invention, as well as the preferable direction of the information flow which configures, consequently, the invention in the stric sense relative to a new information system to be applied to passenger carrying vehicles.

### DETAILED DESCRIPTION OF THE PREFERRED EMBODIMENT OF THE INVENTION

The block diagram in figure 1 shows how the new information system to be applied to passenger carrying vehicles, preferably railways, of the invention, is constituted, starting from a computer (1), having at its expansion slots a TV tuned card (3), connected, in turn, to an omnidirectional TV antenna (4), and a radio tuned card (5), also connected to an omnidirectional radio antenna (6).

Both the TV tuned card (3) and the radio tuned card (5) receive a signal from certain emitter through the nearest or more accessible repeater, according to the geographical location of the vehicle carrying the invention, this datum being acceded via a card capturing the data provided by a GPS (7).

As can be seen, the computer (1) is also linked to a digital video reproducer (10), MPEG format, which reproduces themes previously recorded on mass data recording systems (11), such as CD ROM or HD hard disk.

A VGA/PAL converter has been provided, which allows the VGA signal, generated by the computer (1), to be converted to PAL format, allowing for a subheading or presentation of animations in the video monitors (14).

Also, a merging tablet (15) has been provided, which allows two PAL signals to be merged in only one, to be used for including messages generated by the computer (1) in the video signal generated by the TV tuned card (3) or the digital video reproducer (10).

The audio signal generated by any subsystem is treated or reproduced by a sound card (2), connected to one of the computer expansion slots (1), providing the users thru audition monitors (16) with sound, available together with the video monitors (14).

Any of the mentioned signals is alloted to the receivers existing in the context of the invention by means of an audio/video matrix (18), which have eight inputs and eight outputs, this matrix making also possible to link preexisting magnetoscopes (19) or audio reproducers (19').

The invention can be managed through control interfaces (13), located next the physical location occupied by said subsystems, or through command packets transmitted via digital cellular telephony and picked up through a digital cellular phone (8) connected to a modem (9) electronically linked to the computer (1) at one of its expansion slots, as well as through the data provided by the GPS (7).

The requirements of the users with regard to the new information system to be applied to passenger carrying vehicles, are performed by means of tactil displays (17), which optionally, can be integrated into the video monitors (14).

It is not considered necessary to extend this description for any skilled in the art to understand the scope of the invention and the advantages derived from it.

The materials, shape, size and arrangement of its components will be open to variation, provided that it does not imply any alteration to the essence of the invention.

The terms under which this specification has been described should be always taken in an ample and non-limiting sense.

## Claims

1. A new information system to be applied to passenger carrying vehicles, preferably railways, characterized in that, through the expansion slots of a computer (1), and by means of a suitable software, a TV tuned - card (3) is controlled, connected to an omnidirectional TV antenna (4), as well as a radio tuned card (5), also electrically connected to an omnidirectional radio antena (6) and a digital video reproducer (10), capable of load and reproduce images from a mass recording means - (11), such as a CD ROM or a HD hard disk, the video signals generated by the computer (1) being treated in a VGA/PAL converter (12), which allows the signal to be reproduced in video monitors (14) installed in the vehicle, and which are complemented by means of the audio signal generated by a sound card (2) and distributed to several audio monitors (16), existing close to the video monitors (14) by means of an audio/video matrix (18), that, besides, allows preexisting magnetoscopes (19) or audio reproducers (19') to be incorporated.

2. A new information system to be applied to passenger carrying vehicles, according to claim 1, characterized in that the tuning of a certain emitter is performed as per the program frequency of the nearest repeater, by coordinating the reception frequency of the TV tuned card (3) and the radio tuned card (5) with the geographical location wherein the vehicle is situated, this datum being picked up through a GPS (7), and its respective data capture card related to the computer (1), through one of its expansion slots.

3. A new information system to be applied to passenger carrying vehicles, according to the preceding claims, characterized in that it is fitted with a PAL signal merger, allowing a PAL format video signal to be merged with any message generated by the computer (1), also in PAL format.

4. A new information system to be applied to passenger carrying vehicles, according to the preceding claims, characterized in that the control can be performed "in situ" by means of adequate control interfaces (13), either by means of command packets transmitted via cellular telephony and picked up by a cellular phone (8), related to a modem (9), also related to the computer (1) through one of the expansion slots, or by relating events to the geographical location of the vehicle picking up the GPS (7).

5. A new information system to be applied to passenger carrying vehicles, according to the preceding claims, characterized in that the users' demands are integrated through tactile displays (17), which optionally can be integrated in the video monitors (14).
